Europäisches Patentamt

**European Patent Office**

Office européen des brevets

(11) Veröffentlichungsnummer: **0 006 221**
**B1**

(12) **EUROPÄISCHE PATENTSCHRIFT**

(45) Veröffentlichungstag der Patentschrift:
04.11.81

(51) Int. Cl.³: **G 01 F 23/00**, G 03 G 15/08

(21) Anmeldenummer. 79101920.1

(22) Anmeldetag: 13.06.79

(54) **Vorrichtung zum Bestimmen der in einem Behälter befindlichen Teilchenmenge.**

(30) Priorität 21.06.78 DE 2827171

(43) Veröffentlichungstag der Anmeldung:
09.01.80 Patentblatt 80/1

(45) Bekanntmachung des Hinweises auf die Patenterteilung:
04.11.81 Patentblatt 81/44

(84) Benannte Vertragsstaaten:
AT BE CH DE FR GB IT NL SE

(56) Entgegenhaltungen:
CH-A-405 740
DE-A-1 927 285
US-A-2 915 205
US-A-3 443 437

**IBM TECHNICAL DISCLOSURE BULLETIN,**
**Vol. 13, Nr. 11, April 1971,**
**New York, US,**
**W. D. FREEMAN et al.:**
**»Toner reservoir level detector system«,**
**Seite 3217**

(73) Patentinhaber: **HOECHST AKTIENGESELLSCHAFT,**
**KALLE Niederlassung der Hoechst AG Patentabteilung**
**Postfach 3540,**
**Rheingaustrasse 190 D-6200 Wiesbaden 1 (DE)**

(72) Erfinder: **Kleinschmidt, Willi, Am Leisrain 44,**
**D-6230 Frankfurt/M 80 (DE)**
Erfinder: **Bock, Hartmut, Dr., Behringstrasse 30,**
**D-6239 Kelkheim-Fischbach (DE)**

Vorrichtung zum Bestimmen der in einem Behälter befindlichen Teilchenmenge

Die Erfindung betrifft eine Vorrichtung zum Bestimmen der in einem Behälter befindlichen Teilchenmenge, mit einer im Behälter beweglich gelagerten Fühleinrichtung, mit einer Klappe, die auf einer drehbar gelagerten Achse befestigt ist, von einem elastischen Element gegen die Teilchenmenge gedrückt wird und mit einem auf der Achse befestigten Nocken, der bei der Drehung der Achse mit einem elektrischen Schaltglied in Kontakt bringbar und von diesem trennbar ist.

Die Vorrichtung ist unter anderem für den Einsatz in elektrofotografischen Kopiergeräten geeignet, die Vorratsbehälter, gefüllt mit pulverförmigem Toner zum Nachdosieren des Entwicklergemisches enthalten. Die Entwicklung eines latenten Bildes auf einem Aufzeichnungsträger erfolgt bekannterweise derart, daß ein Entwicklergemisch, bestehend aus Toner- und Trägerteilchen, mit dem elektrostatischen Ladungsbild in Berührung gebracht wird. Die Tonerpartikel erhalten bei der Vermischung mit den Trägerteilchen eine triboelektrische Aufladung mit einer bestimmten Polarität. Das von dem Ladungsbild ausgehende elektrische Feld zieht die Tonerpartikel an und löst sie von den Trägerteilchen. Infolge der dadurch bedingten Verarmung des Entwicklergemisches an Tonerpartikeln muß ständig Toner dem Entwicklergemisch zugeführt werden, um die Gesamttonerkonzentration im Entwicklergemisch im wesentlichen konstant zu halten. Es besteht dabei ein Bedarf an einer Vorrichtung zum Erfassen des Füllstandes des Toners in einem Vorratsbehälter, die den Verbrauch an Tonerpartikeln bzw. das Absinken des Füllstandes innerhalb des Vorratsbehälters unter eine bestimmte Marke rechtzeitig anzeigt, damit das Bedienungspersonal den Vorratsbehälter mit Toner auffüllt und dadurch ein Arbeiten des Kopiergerätes mit gleichmäßiger Bildqualität der entwickelten Bilder gewährleistet ist.

Es ist eine Anzahl von Füllstands-Meßeinrichtungen zum Erfassen des Füllstandes von Tonerpartikeln in einem Tonervorratsbehälter bekannt, von denen u. a. eine elektrische Schaltanordnung erwähnt werden soll, die bei Unterschreiten einer bestimmten Füllhöhe im Vorratsbehälter anspricht und ein Signal an eine entfernt liegende Anzeigevorrichtung abgibt. Dabei ist von Nachteil, daß die Tonerpartikel wegen ihrer geringen Größe in den Schalter bzw. in die Schaltelemente eindringen können und dadurch Störungen bei der Signalerzeugung verursachen können.

Aus der Druckschrift IBM-TECHNICAL DISCLOSURE BULLETIN, Vol. 13, Nr. 11, April 1971, Seite 3217 ist eine Vorrichtung zum Bestimmen der in einem Behälter befindlichen Teilchenmenge bekannt, die eine Fühleinrichtung mit einer Klappe umfaßt, die auf einer drehbar gelagerten Achse befestigt ist, ferner ein elastisches Element, das die Klappe gegen die Teilchenmenge drückt und einen auf der Achse befestigten Nocken, der bei Drehung der Achse mit einem elektrischen Schaltglied in Kontakt bringbar und von diesem trennbar ist. Die Rückstellung der Klappe in ihre Vertikalstellung erfolgt mit Hilfe zweier Federn und eines Solenoids. Die beiden Federn greifen an einem Arm an, und die untere Feder zieht die Klappe nach unten in ihre Vertikalstellung, wobei die Federwirkung durch die Teilchenmenge im Behälter unterstützt wird. Wird das Solenoid durch die Maschinenlogik erregt und ist der Füllstand im Behälter niedrig, so überwiegt die Zugkraft der oberen Feder, so daß die Klappe in eine Schräglage hochgezogen wird und dabei gleichzeitig der Arm gegen ein Schaltelement zu liegen kommt und dieses betätigt. Dadurch wird das Solenoid entregt und die untere Feder zieht die Klappe wieder in die vertikale Ausgangsstellung zurück. Die Rückstellung der Fühlvorrichtung erfolgt bei diesem Meßsystem nicht mit Hilfe rein mechanischer Mittel, sondern mittels eines Solenoids, das mit zwei Zugfedern zusammenwirkt.

Aus der DE-A-1 927 285 ist eine automatische Anzeigevorrichtung für die Vorratshöhe von Toner in einem Behälter bekannt, die einen Fühler aufweist, der bewegbar gelagert und mit einem nachgiebigen Antrieb verbunden ist. Die jeweilige Stellung des Fühlers wird von einer Anzeigevorrichtung angezeigt, die einen von dem Fühler betätigbaren elektrischen Schalter in einem Anzeigestromkreis aufweist.

Aus der DE-A-2 261 253 ist eine Füllstands-Meßvorrichtung bekannt, in der in einem Behälter eine mit den Tonerpartikeln in Berührung stehende Fühleinrichtung beweglich gelagert ist, die bei einem Abstand der Tonerpartikel von der Fühleinrichtung aus einer ersten in eine zweite Stellung bewegbar ist, welche das Unterschreiten eines für den optimalen Betrieb der Kopiermaschine vorgegebenen Pegels der in dem Vorratsbehälter vorhandenen Tonerpartikel anzeigt. Die Fühleinrichtung besteht aus einem Stabmagneten, der auf einer drehbar gelagerten Achse im Inneren des Vorratsbehälters angebracht ist, und aus zwei weiteren Stabmagneten, die an den Innenwänden des Vorratsbehälters befestigt sind. Im gefüllten Zustand des Vorratsbehälters ist der mit der Achse verbundene Stabmagnet im Toner eingetaucht und seine Längsachse verläuft etwa im rechten Winkel zu den Längsachsen der beiden Stabmagneten, die miteinander fluchten. Sobald der Tonervorrat im Vorratsbehälter so weit abgesunken ist, daß der auf der Achse befindliche Stabmagnet freigegeben wird, führt dieser unter Einfluß der Magnetfeldlinien der beiden übrigen Stabmagnete eine Drehung um 90° aus und kommt mit diesen beiden Stabmagneten in einer Ebene zu liegen. Mit anderen Worten bedeutet dies, daß die beiden Magnetanordnungen so ausgebildet sind, daß sie zusammen ein Magnetfeld erzeugen, welches auf die Achse ein Drehmoment ausübt. Dieses magnetische Drehmoment bewirkt die Drehung der Achse aus der ersten in die zweite Position, wenn der im Vorratsbehälter befindliche Toner eine vorgegebene Mindesthöhe unterschreitet. Bei der Drehung aus der ersten in die zweite Position wird ein Schalter einer elektrischen Anordnung betätigt, um ein elektrisches Signal zu erzeugen, das eine Anzeigevorrichtung auslöst.

Diese bekannte Vorrichtung ist durch die Verwendung von zumindest drei Stabmagneten relativ teuer in der Herstellung und weist keine Rückstellung der Meßeinrichtung in die Ausgangslage vor dem Nachfüllen von Toner auf. Dies bedeutet, daß vor dem Einfüllen des Toners in den Vorratsbehälter der auf der Achse aufsitzende Stabmagnet manuell in seine ursprüngliche Lage, das ist die erste Position, gebracht werden muß, in der seine Längsachse senkrecht zu den miteinander fluchtenden Längsachsen der beiden übrigen Stabmagnete verläuft, um eine fehlerfreie Anzeige des Füllstandes sicherzustellen.

Aufgabe der Erfindung ist es, eine Vorrichtung zum Erfassen der in einem Behälter befindlichen Teilchenmenge, insbesondere von pulverförmigem Toner für die Nachdosierung eines Entwicklergemisches für die Pulverentwicklung eines latenten Ladungsbildes zu schaffen, die auf mechanischer Basis ohne Verwendung von Solenoid- oder Magnetanordnungen kostengünstig aufgebaut ist und weitgehend störsicher arbeitet.

Diese Aufgabe wird erfindungsgemäß dadurch gelöst, daß außen an der einen Schmalseite eines schwenkbaren Deckels des Behälters ein erster Hebel einer Rückstellvorrichtung für die Fühleinrichtung angebracht ist, der bei geschlossenem Deckel sich nach unten und bei geöffnetem Deckel horizontal erstreckt und daß an einem außerhalb des Behälters befindlichen Achsenteil ein zweiter Hebel der Rückstellvorrichtung befestigt ist, der gegenüber dem Nocken versetzt ist und während des Öffnungsvorgangs des Deckels auf dem in eine Horizontallage geschwenkten ersten Hebel zu liegen kommt und von diesem bei voll geöffnetem Deckel in eine horizontale Position bewegt wird.

Die weitere Ausbildung der Erfindung ergibt sich aus den kennzeichnenden Merkmalen der Patentansprüche 2 bis 9.

Mit der Erfindung wird der Vorteil erzielt, daß die Vorrichtung mechanisch einfach aufgebaut ist und im Inneren des Behälters ein einziges bewegliches Teil aufweist, das weitgehend störsicher arbeitet. Von Vorteil ist des weiteren die Möglichkeit einer Rückstellung der Fühleinrichtung in ihre Ausgangslage durch Öffnen des Deckels des Vorratsbehälters zum Nachfüllen des Füllgutes.

Die Erfindung wird im folgenden anhand eines in den Zeichnungen dargestellten Ausführungsbeispiels näher beschrieben.

Es zeigt

Fig. 1 eine schematische Teilansicht eines Behälters mit der Vorrichtung nach der Erfindung bei geöffnetem Deckel, und

Fig. 2 den Behälter mit der Vorrichtung nach Fig. 1 bei geschlossenem Deckel und Unterschreiten des Mindestfüllstandes im Behälter.

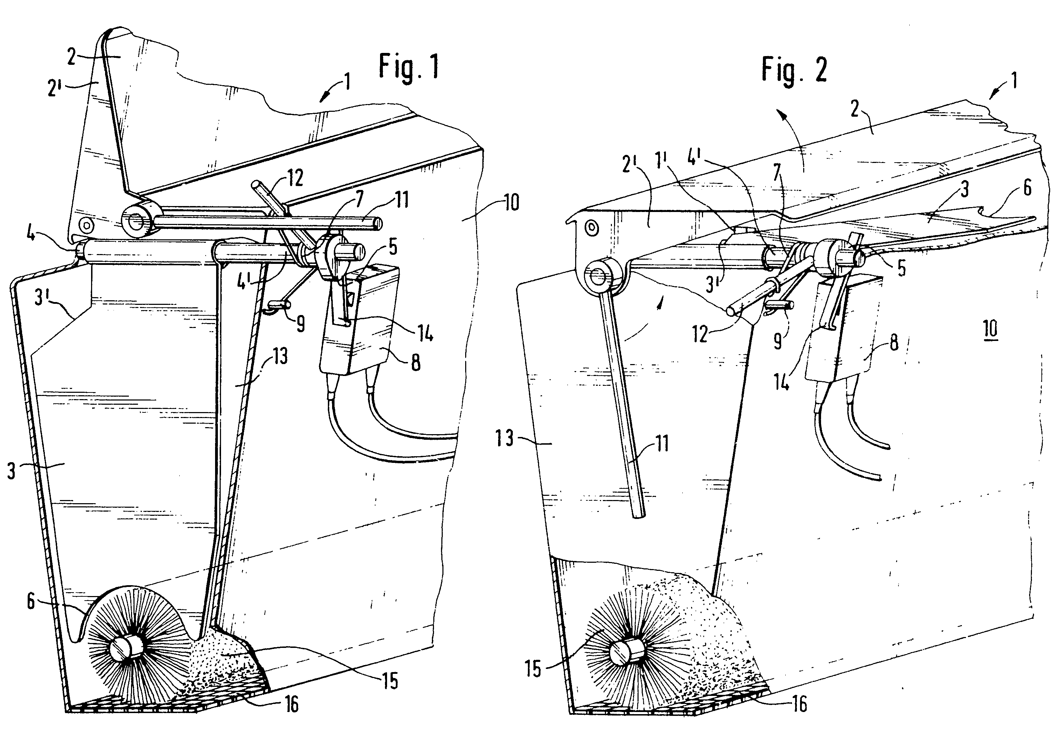

Bei der Beschreibung des in den Fig. 1 und 2 dargestellten Ausführungsbeispiels wird im folgenden auf eine Tonernachdosierung Bezug genommen, jedoch wird vorausgeschickt, daß diese erfindungsgemäße Vorrichtung für jedes pulverförmige Füllgut, das aus einem Behälter heraus nachdosiert wird, geeignet ist.

Ein Behälter 1 einer Tonernachdosiereinrichtung in einem elektrofotografischen Kopiergerät ist zu Beginn des Kopiervorganges mit Toner nahezu bis zum Rand gefüllt, der in den Zeichnungen aus Gründen der besseren Übersichtlichkeit nicht dargestellt ist. Im Boden des Behälters 1 befindet sich eine Abgabeöffnung mit einem Gitter 16, durch das Toner in das nicht dargestellte Entwicklergemisch austreten kann. Knapp oberhalb des Gitters 16 ist ein an sich bekanntes Förderelement 15, beispielsweise eine Förderschnecke oder eine Bürste angebracht, die einen gleichmäßigen Austrag des Toners durch das Gitter 16 bewirkt.

Wenn der Behälter 1 bis oben hin mit Toner gefüllt ist, dann nimmt eine Klappe 3 die in Fig. 1 gezeigte Ausgangsstellung ein, in der sich die Klappe 3 nach unten erstreckt. Die Klappe 3 ist auf einer im Behälter 1 drehbar gelagerten Achse 4 befestigt. Diese Achse 4 ist nahe der einen Seitenwand 13 und nahe eines Deckels 2 des Behälters 1 in der Rückwand desselben gelagert und durch die Vorderwand 10 des Behälters 1 nach außen geführt. Auf einem außerhalb des Behälters 1 befindlichen Achsenteil 4' der Achse 4 sitzt ein Nocken 5 auf. Zwischen dem Nocken 5 und der Außenfläche der Vorderwand 10 umgibt den Achsenteil 4' ein elastisches Element 7, beispielsweise eine Schenkelfeder, die mit einem Ende gegen ein Halteteil 9 anliegt bzw. an diesem befestigt ist, das an der Vorderwand 10 angebracht ist. Das andere Ende der Schenkelfeder kann beispielsweise hakenförmig ausgebildet sein und ist an einem zweiten Hebel 12 angehängt. Die Schenkelfeder erteilt der Achse 4 ein Drehmoment, welches die Klappe 3 bei leerem Behälter 1 nach oben drückt. Solange der Behälter 1 über die Mindestfüllhöhe hinaus mit Toner gefüllt ist, drückt dieser gegen den Druck des elastischen Elements 7 die Klappe 3 nach unten, so daß sie parallel zu der Seitenwand 13 des Behälters 1 verläuft.

Der außerhalb des Behälters auf dem Achsenteil 4' aufsitzende Nocken 5 gelangt bei der Drehung der Achse 4 mit einem elektrischen Schaltglied 8, beispielsweise einem Mikroschalter, in Kontakt bzw. wird von diesem getrennt. Der Nocken 5 erstreckt sich parallel zu der Klappe 3, während der zweite Hebel 12 im wesentlichen im rechten Winkel zu dem Nocken 5 bzw. zu der Klappe 3 verläuft. Der Mikroschalter ist an der Außenseite der Vorderwand 10 des Behälters 1 angeordnet, und zwar in einem seitlichen Abstand zur Achse 4, der so gewählt ist, daß der Nocken 5 in der Ausgangsposition der Klappe 3, die sich dann nach unten erstreckt, die Fahne 14 des Mikroschalters nicht berührt.

Den Behälter 1 verschließt ein schwenkbarer Deckel 2, an dessen Schmalseite 2' ein erster Hebel 11 angebracht ist, der sich bei geschlossenem Deckel 2 nach unten und bei geöffnetem Deckel horizontal erstreckt. Der erste Hebel 11 ist länger als die Seitenwand 13 des Behälters 1, so daß er bei geöffnetem Deckel 2 über die Seitenwand 13 des Behälters 1 hinausragt.

Die Länge der Klappe 3 wird etwa gleich der Füllhöhe des Behälters 1 gewählt. Das freie Ende der Klappe 3 weist einen Ausschnitt 6 auf, der dem Durchmesser des Förderelements 15 angepaßt ist, so daß die Klappe 3 in ihrer Ausgangsposition das Förderelement 15 umschließt, ohne auf diesem aufzusitzen. Der Umriß der Klappe 3 ist der Querschnittsfläche des Behälters 1 angepaßt.

Sobald die Mindestfüllhöhe im Behälter 1 durch die ständige Abgabe von Toner unterschritten wird, wird die Klappe 3 durch den Toner freigegeben und durch das elastische Element 7 nach oben gedrückt. Durch die Drehung der Achse 4 gelangt der Nocken 5 in Kontakt mit der Fahne 14 des elektrischen Schaltgliedes 8, das betätigt wird und ein Signal an eine nicht dargestellte Anzeigeeinrichtung, beispielsweise an ein Signallämpchen oder an einen Summer, abgibt, um das Bedienungspersonal darauf aufmerksam zu machen, daß Toner nachgefüllt werden muß. Diese Anzeigeposition der Klappe 3 ist in Fig. 2 bei geschlossenem Deckel 2 dargestellt. Wie aus Fig. 2 ersichtlich ist, nimmt dann die Klappe 3 eine im wesentlichen horizontale Anzeigeposition ein. Diese Anzeigeposition kann gegen Ende des Federweges mechanisch durch einen Anschlag festgelegt werden. In Fig. 1 ist die Klappe 3 mit einer Schulter 3' ausgebildet, die durch einen Behältervorsprung 1' als Anschlag in ihrer Bewegungsbahn begrenzt wird.

Wird der Deckel 2 durch das Bedienungspersonal geöffnet, um Toner nachzufüllen, so führt der erste Hebel 11 eine Schwenkbewegung bis in seine Horizontallage durch, wobei er während dieser Schwenkbewegung den zweiten Hebel 12 an der Unterseite erfaßt und in die Horizontallage nach oben hin mitnimmt. Die Schwenkbewegung des Hebels 12 überträgt sich auf die Achse 4, wodurch die Klappe 3 in ihre Ausgangslage, wie in Fig. 1 dargestellt, zurückkehrt. In der Ausgangsposition der Klappe 3 ist der Nocken 5 von der Fahne 14 des elektrischen Schaltgliedes 8 weggeschwenkt, so daß der Mikroschalter kein Signal an die Anzeigeeinrichtung abgibt. Somit wird durch Öffnen des Deckels 2 des Behälters 1 in einfacher Weise eine Rückstellung der Anzeigeeinrichtung erreicht, da die Hebel 11 und 12 die Klappe 3 in ihre Ausgangsposition zurückführen. Nachdem Toner nachgefüllt wurde, bleibt die Klappe 3 zunächst in ihrer Ausgangsposition, solange der Toner eine Mindest-Füllstandshöhe im Vorratsbehälter nicht unterschreitet.

Es bedarf keiner weiteren Erläuterungen, zu erkennen, daß durch die Länge und Form der Klappe 3 die Mindest-Füllstandshöhe festgelegt werden kann, das ist die Höhe, bei der ein Übergang der Klappe 3 aus ihrer Ausgangsposition in ihre Anzeigeposition nach Fig. 2 erfolgt. Eine Verkürzung der Klappe 3 bzw. eine Vergrößerung des Ausschnittes 6 erhöht offensichtlich die Mindestfüllhöhe im Behälter 1. Sobald der Tonerpegel bis nahe an das Klappenende abgesunken ist, gibt der Toner die Klappe 3 frei und der Druck des elastischen Elements 7 bewegt die Klappe 3 in ihre Anzeigeposition gemäß Fig. 2.

Es ist ohne weiteres ersichtlich, daß auch durch die Stärke der Schenkelfeder 7 die Mindest-Füllstandshöhe festgelegt werden kann. Eine größere Federkraft vergrößert offensichtlich die Mindestfüllhöhe im Behälter 1.

**Patentansprüche**

1. Vorrichtung zum Bestimmen der in einem Behälter befindlichen Teilchenmenge, mit einer im Behälter beweglich gelagerten Fühleinrichtung, mit einer Klappe, die auf einer drehbar gelagerten Achse befestigt ist, von einem elastischen Element gegen die Teilchenmenge gedrückt wird und mit einem auf der Achse befestigten Nocken, der bei der Drehung der Achse mit einem elektrischen Schaltglied in Kontakt bringbar und von diesem trennbar ist, dadurch gekennzeichnet, daß außen an der einen Schmalseite (2') eines schwenkbaren Deckels (2) des Behälters (1) ein erster Hebel (11) einer Rückstellvorrichtung für die Fühleinrichtung angebracht ist, der bei geschlossenem Deckel (2) sich nach unten und bei geöffnetem Deckel (2) horizontal erstreckt und daß an einem außerhalb des Behälters (1) befindlichen Achsenteil (4') ein zweiter Hebel (12) der Rückstellvorrichtung befestigt ist, der gegenüber dem Nocken (5) versetzt ist und während des Öffnungsvorgangs des Deckels (2) auf dem in eine Horizontallage geschwenkten ersten Hebel (11) zu liegen kommt und von diesem bei voll geöffnetem Deckel (2) in eine horizontale Position bewegt wird.

2. Vorrichtung nach Anspruch 1, dadurch gekennzeichnet, daß die Achse (4) durch die Vorderwand (10) des Behälters (1) hindurch nach außen geführt ist und daß der Nocken (5) auf dem außerhalb des Behälters (1) befindlichen Achsenteil (4') angeordnet ist.

3. Vorrichtung nach den Ansprüchen 1 und 2, dadurch gekennzeichnet, daß das elastische Element (7) eine Schenkelfeder ist, die zwischen dem Nocken (5) und der Außenfläche der Vorderwand (10) auf dem Achsenteil (4') so aufsitzt, daß sie der Achse (4) ein Drehmoment erteilt, welches die Klappe (3) bei leerem Behälter (1) nach oben drückt.

4. Vorrichtung nach Anspruch 1, dadurch gekennzeichnet, daß die Länge des ersten Hebels (11) so gewählt ist, daß er bei geöffnetem Deckel (2) über die Seitenwand (13) des Behälters (1) hinausragt.

5. Vorrichtung nach den Ansprüchen 1 bis 4, dadurch gekennzeichnet, daß sich der Nocken (5) parallel zu der Klappe (3) erstreckt und daß der zweite Hebel (12) ungefähr im rechten Winkel zu der Klappe (3) angeordnet ist.

6. Vorrichtung nach Anspruch 1, dadurch gekennzeichnet, daß das elektrische Schaltglied (8) ein Mikroschalter ist, dessen Fahne (14) bei der Drehbewegung der Achse (4) mit dem Nocken (5) in Kontakt gelangt, der den Mikroschalter schaltet.

7. Vorrichtung nach Anspruch 1, dadurch gekennzeichnet, daß die Länge der Klappe (3) in etwa gleich der Füllhöhe des Behälters (1) ist, daß das freie Ende der Klappe (3) einen Ausschnitt (6) aufweist und daß der Umriß der Klappe (3) der Querschnittsfläche des Behälters (1) angepaßt ist.

8. Vorrichtung nach Anspruch 7, dadurch gekennzeichnet, daß die Klappe (3) eine Schulter (3') aufweist, die in der Anzeigeposition gegen einen Behältervorsprung (1') als Anschlag liegt, der die Bewegungsbahn der Klappe (3) begrenzt.

9. Vorrichtung nach Anspruch 6, dadurch gekennzeichnet, daß das elektrische Schaltglied (8) an der Außenseite der Vorderwand (10) des Behälters (1) angeordnet ist.

## Claims

1. Device for determining the quantity of particles present in a container, comprising a sensor device which is in a mobile mounting in the container and which comprises a flap which is fixed on an axle rotably mounted in the container and is urged against the quantity of particles by an elastic element, and which further comprises a cam on the axle, which cam can, on rotation of the axle, be brought into contact with an electrical switch member and be separated from the latter, said device being characterized in that a first lever (11) of a resetting means for the sensor device is fitted on the outside of one narrow side (2') of a swivelling cover (2) of the container (1), which lever extends downwards when the cover (2) is closed and extends horizontally when the cover is open, and in that a second lever (12) of the resetting means is fitted on an axle part (4') located outside the container (1), which lever is offset relative to the cam (5) and, in the course of opening the cover (2), comes to lie on the first lever (11), which is swivelled into a horizontal position, and is moved by the first lever into a horizontal position when the cover (2) is fully opened.

2. Device as claimed in Claim 1, where the axle (4) passes through the front wall (10) of the container (1) to the outside and the cam (5) is arranged on the axle part (4') which is located outside the container (1).

3. Device as claimed in Claims 1 and 2, wherein the elastic element (7) is a leg spring which is seated on the axle part (4') between the cam (5) and the outer surface of the front wall (10) in such a way that it imparts to the axle (4) a torque which presses the flap (3) upwards when the container (1) is empty.

4. Device as claimed in Claim 1, wherein the length of the first lever (11) is chosen so that it protrudes beyond the side wall (13) of the container (1) when the cover (2) is open.

5. Device as claimed in any of Claims 1 to 4, wherein the cam (5) extends parallel to the flap (3) and the second lever (12) is arranged at approximately a right angle to the flap (3).

6. Device as claimed in Claim 1, wherein the electrical switch member (8) is a micro-switch, the lug (14) of which comes, on rotary motion of the axle (4), into contact with the cam (5) which switches the micro-switch.

7. Device as claimed in Claim 1, wherein the length of the flap (3) is approximately equal to the filling level of the container (1), the free end of the flap (3) has a cut-out (6) and the contour of the flap (3) is adapted to the cross-sectional area of the container (1).

8. Device as claimed in Claim 7, wherein the flap (3) has a shoulder (3') which, in the indicating position, bears against a projection (1') of the container (1) as a stop which limits the path of motion of the flap (3).

9. Device as claimed in Claim 6, wherein the electrical switch member (8) is mounted on the outside of the front wall (10) of the container (1).

## Revendications

1. Dispositif pour la détermination quantitative des particules dans un réservoir, équipé d'un palpeur mobile se trouvant à l'intérieur du réservoir, d'un violet fixé sur an axe rotatif et poussé par un élément élastique contre la réserve de particules, et d'une came qui est fixée sur cet axe rotatif et qui, entraînée par le mouvement de celui-ci, établit et rompt le contact avec un élément de commutation électrique, ce dispositif étant caractérisé en ce qu'à l'intérieur de l'une des parois latérales étroites (2') d'un couvercle mobile (2) du réservoir (1) se trouve un premier levier (11) qui fait partie d'un équipement de rappel du dispositif de palpage et qui, en position de fermeture du couvercle (2), se trouve dirigé vers le bas et, en position d'ouverture du couvercle (2), s'étend horizontalement, et en ce qu'un deuxième levier (12) de cet équipement de rappel, qui est fixé sur l'extrémité (4') de l'axe dépassant le parois du réservoir (1) et qui est décalé par rapport à la came (5), s'appuie, pendant le mouvement d'ouverture du couvercle (2), sur le premier levier (11) pivotant vers la position horizontale, pour être entraîné par ce dernier dans une position également horizontale, au cas d'une ouverture complète du couvercle (2).

2. Dispositif selon la revendication 1, caractérisé en ce que l'axe (4) traverse la paroi avant (10) du réservoir (1) et se dirige vers l'extérieur et en ce que la came (5) est fixée sur l'extrémité extérieure (4') de l'axe (4).

3. Dispositif selon les revendications 1 et 2, caractérisé en ce que l'élément élastique (7) est un ressort à branches maintenu sur l'extrémité (4') de l'axe entre la came (5) et la face extérieure de la paroi avant (10) et qui imprime à l'axe (4) un couple de rotation qui, à l'état vide du réservoir (1), pousse le volet (3) vers le haut.

4. Dispositif selon la revendication 1, caractérisé en ce que la longueur du premier levier (11) est déterminée de manière qu'en position ouverte du couvercle (2) il dépasse la parois latérale (13) du réservoir (1).

5. Dispositif selon l'une des revendications 1 à 4, caractérisé en ce que la came (5) s'étend parallèlement au volet (3) et en ce que le deuxième levier (12) forme un angle approximativement droit avec ce même volet (3).

6. Dispositif selon la revendication 1, caractérisé en ce que l'élément du commutation électrique (8) est un microcontact dont la palette (14), sous l'effet du mouvement de rotation de l'axe (4) entre en contact avec la came (5) qui commande le microcontact.

7. Dispositif selon la revendication 1, caractérisé en ce que la longueur du volet (3) correspond approximativement à la hauteur de remplissage du réservoir (1), en ce que l'extrémité libre du volet (3) présente une découpure (6) et en ce que la forme géométrique du volet (3) est adaptée à la section transversale du réservoir (1).

8. Dispositif selon la revendication 7, caractérisé en ce que le volet (3) porte un épaulement (3') qui, dans la position d'information, fait fonction de butée d'arrêt en s'appu nt contre un appendice (1') fixé sur le réservo , limitant ainsi le mouvement oscillant du vol 3).

9 Dispositif selon la revendication 6, caractérisé en ce que l'élément de commutation électrique (8) est fixé sur la face extérieure de la paroi avant (10) du réservoir (1).

Fig. 1

Fig. 2